(19) **Europäisches Patentamt European Patent Office Office européen des brevets**

(11) **EP 4 488 120 B1**

(12) **EUROPEAN PATENT SPECIFICATION**

(45) Date of publication and mention
of the grant of the patent:
**22.04.2026 Bulletin 2026/17**

(51) International Patent Classification (IPC):
**B60R 1/08** (2006.01)

(52) Cooperative Patent Classification (CPC):
**B60R 1/088**

(21) Application number: **24174260.0**

(22) Date of filing: **06.05.2024**

(54) **ELECTROCHROMIC REARVIEW MIRROR ASSEMBLY**

ELEKTROCHROME RÜCKSPIEGELANORDNUNG

ENSEMBLE RÉTROVISEUR ÉLECTROCHROMIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **05.07.2023 TW 112125140**

(43) Date of publication of application:
**08.01.2025 Bulletin 2025/02**

(73) Proprietor: **AimVEK Corporation**
**Hukou Township Hsinchu County (TW)**

(72) Inventors:
• **CHIANG, Ming-Chun**
**Hukou Township, Hsinchu County (TW)**
• **CHENG, Yi-Chi**
**Hukou Township, Hsinchu County (TW)**

(74) Representative: **2K Patent Partnerschaft mbB**
**Hamburger Allee 26-28**
**60486 Frankfurt am Main (DE)**

(56) References cited:
**US-A1- 2019 094 642      US-B2- 10 746 910**
**US-B2- 7 663 798**

# Description

## FIELD OF THE INVENTION

The present invention relates to a rearview mirror assembly, in particular to an electrochromic rearview mirror assembly.

## BACKGROUND OF THE INVENTION

With diverse application requirements, vehicular rearview mirrors now serve beyond the traditional function of providing field of vision about cars approaching from behind or road conditions. They incorporate advanced features, such as electrochromic rearview mirrors equipped with ambient light sensors. These mirrors can detect the ambient light intensity and send a signal to control the electrochromic component, altering the light absorption properties of the electrochromic element. This, in turn, adjusts the reflectance of the vehicle's rearview mirror, effectively reducing glare and achieving a dimming effect.

Electrochromic rearview mirrors typically employ a transflective layer, which is a multi-layer film conventionally containing metallic materials. Examples of such mirrors are disclosed in US Patent No. US10746910B2, US Publication No. US20190094642A1, and US Patents Nos. US7821696B2, US7663798B2, US6356376B1, and others. The inclusion of metal in the transflective layer aims to give the mirror an aesthetically pleasing color and improved appearance, measured through parameters like color value or b* value. This results in a clear visual effect for observers looking at the electrochromic rearview mirror from the designated viewing direction, achieving a semi-reflection and semi-transmission effect.

The electrochromic rearview mirror may exhibit a subpar appearance if the multi-layer film on the transflective layer lacks metal materials. Consequently, the applicant contends that there is a need for improvement in existing electrochromic rearview mirrors.

## SUMMARY OF THE INVENTION

One aspect of the disclosure includes an electrochromic rearview mirror assembly, comprising a first substrate, a second substrate, an electrochromic medium, a light-transmitting conductive layer, a transflective film and a hiding perimeter layer. The first substrate comprises a first surface facing a viewer and a second surface behind the first surface, the first surface comprises a first peripheral region and a first primary region surrounded by the first peripheral region, the second surface comprises a second peripheral region and a second primary region surrounded by the second peripheral region. The second substrate is disposed behind the first substrate, the second substrate comprises a third surface facing the first substrate and a fourth surface opposite to the third surface. The electrochromic medium is disposed between the first substrate and the second substrate. The light-transmitting conductive layer is disposed on the second primary region of the second surface of the first substrate. The transflective film is disposed on the third surface of the second substrate, the transflective film faces the second primary region of the second surface of the first substrate. The transflective film is a metal-free multi-layer film and has a color characteristic b* value between -5.7 and 0 prior to fabrication of the electrochromic rearview mirror assembly. The hiding perimeter layer is disposed on the second peripheral region of the second surface of the first substrate. The hiding perimeter layer has a color characteristic b* value between -2.6 and 0 prior to fabrication of the electrochromic rearview mirror assembly.

A color characteristic b* value of the first peripheral region on the fabricated electrochromic rearview mirror assembly is between -2.6 and 0, and a color characteristic b* value of the first primary region on the fabricated electrochromic rearview mirror assembly is between 0 and +2.5 when viewed from front of the electrochromic rearview mirror assembly.

A color characteristic b* value of the transflective film and a color characteristic b* value of the hiding perimeter layer satisfy the following formula:

$$b_4^* < b_3^*$$

$b_3^*$ is the color characteristic b* value of the hiding perimeter layer prior to fabrication of the electrochromic rearview mirror assembly, and $b_4^*$ is the color characteristic b* value of the transflective film. prior to fabrication of the electrochromic rearview mirror assembly.

The transflective film is disposed on the third surface of the second substrate, the transflective film is a metal-free multi-layer film and has a color characteristic b* value between -5.7 and 0 prior to fabrication of the electrochromic rearview mirror assembly. The hiding perimeter layer is disposed on the second peripheral region of the second surface of the first substrate, the hiding perimeter layer has a color characteristic b* value between -2.6 and 0 prior to fabrication of the electrochromic rearview mirror assembly.

Still another aspect of the disclosure includes an electrochromic rearview mirror assembly, comprising a first substrate, a second substrate, an electrochromic medium, a light-transmitting conductive layer, a transflective film and a hiding perimeter layer. The first substrate comprises a first surface facing a viewer and a second surface behind the first surface, the first surface comprises a first peripheral region and a first primary region surrounded by the first peripheral region, the second surface comprises a second peripheral region and a second primary region surrounded by the second peripheral region. The second substrate disposed is disposed behind the first substrate, the second substrate comprises a third surface facing to the first substrate and a fourth surface opposite to the third surface. The electrochromic medium is disposed between the first substrate and the second substrate. The light-transmitting conductive layer is disposed on the second primary region of the second surface of the first substrate. The transflective film is disposed on the third surface of the second substrate, the transflective film is a metal-free multi-layer film. The hiding perimeter layer is disposed on the second peripheral region of the second surface of the first substrate. A color characteristic b* value of the first primary region and a color characteristic b* value of the first peripheral region of the first surface of the first substrate satisfy the following formula:

$$b_1^* < b_2^*$$

$b_1^*$ is the color characteristic b* value of the first peripheral region, and $b_2^*$ is the color characteristic b* value of the first primary region. A b* value of the transflective film and a color characteristic b* value of the hiding perimeter layer satisfy the following formula:

$$b_4^* < b_3^*$$

$b_3^*$ is the color characteristic b* value of the hiding perimeter layer prior to fabrication of the electrochromic rearview mirror assembly, and $b_4^*$ is the color characteristic b* value of the transflective film. prior to fabrication of the electrochromic rearview mirror assembly.

## BRIEF DESCRIPTION OF THE DRAWINGS

FIG. 1 is a schematic cross-sectional view of the vehicular electrochromic rearview mirror assembly according to an embodiment of the present invention.
FIG. 2 is a schematic cross-sectional view of the vehicular electrochromic rearview mirror assembly according to another embodiment of the present invention.
FIG. 3 is a sectional view of a multilayer of the visible light transflective film according to an embodiment of the present invention.
FIG. 4 is a schematic front view of the vehicular electrochromic rearview mirror assembly according to an embodiment of the present invention.

## DETAILED DESCRIPTION OF THE PREFERRED EMBODIMENTS

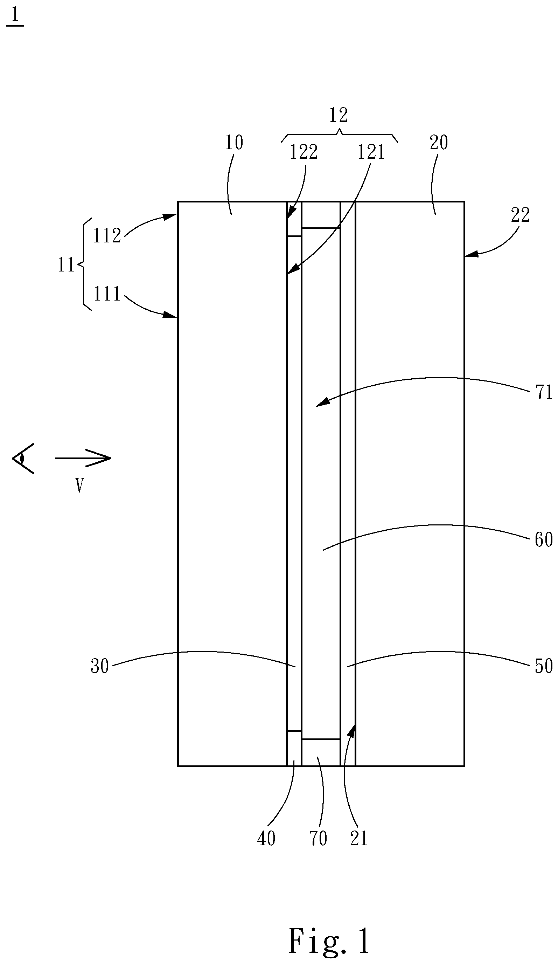

It is to be understood that the terminology used in the description of the various embodiments and examples herein is for the purpose of describing particular examples only and is not intended to be limiting.
As used herein, the singular forms "a", "an", and "the" include the plural forms as well, unless the context clearly indicates otherwise, which do not denote a limitation of quantity, but rather denote the presence of at least one of the referenced item. In addition, the indefinite and definite articles shall include the plural and the singular unless the contrary is clear from the context.
As used herein, the terms "include" and "comprise" indicate the presence of recited features, ingredients, elements and/or compositions, but do not exclude the presence or addition of one or more other features, ingredients, elements, compositions and/or groups thereof.
As used herein, the terms "up", " down", " left", " right", " front", "back" and their derivatives or synonyms, refer to the orientation of elements in the drawings and do not limit the invention unless the context clearly indicates otherwise.
Referring now to the drawings and the illustrative embodiments depicted therein, a vehicular interior electrochromic rearview mirror assembly 1 in FIG. 1 comprises a first substrate 10, a second substrate 20, a light-transmitting conductive layer 30, a hiding perimeter layer 40, and a transflective film 50, an electrochromic medium 60 and a sealing member 70. The second substrate 20 is disposed behind the first substrate 10. The vehicular interior electrochromic rearview mirror assembly 1 may be adjustably mounted to an interior portion of a vehicle.
The first substrate 10 comprises a first surface 11 and a second surface 12. The first surface 11 faces an intended viewer. The second surface 12 is opposite to the first surface. The first surface 11 comprises a first primary region 111 and a first peripheral region 112. The second surface 12 comprises a second primary region 121 and a second peripheral region 122. The first primary region 111 is surrounded by the first peripheral region 112, and the second primary region 121 is surrounded by the second peripheral region 122. The primary region of the substrate may be defined as a central region that is viewable by an observer. The first primary region 111 is corresponding to the second primary region 121 in position and geometry, and the first peripheral region 112 is corresponding to the second peripheral region 122 in position and geometry. The first primary region 111 may define a visible window to the intended viewer, which provides variable transmission and variable reflection to the intended viewer.
The first substrate 10 and the second substrate 20 may be treated as a front component and a rear component, respectively. When observed from a front of the rearview mirror assembly 1 along a viewing direction V towards the first surface 11, the first peripheral region 112 and the second peripheral region 122 align with the hiding perimeter layer 40. The hiding perimeter layer 40 serves to conceal the sealing member 70 when viewed from the front of the rearview mirror assembly 1.

The second substrate 20 comprises a third surface 21 and a fourth surface 22. The third surface 21 faces toward the first substrate 10. The fourth surface 22 is disposed the opposite side to the third surface 21.

In an example, the first substrate 10 is made of an insulating material that is transparent to visible light and possesses ample strength to withstand the operational conditions of automobiles. The material may include glass, polymer, or plastic, with glass options such as borosilicate glass, soda lime glass, float glass, and similar varieties. The specifications for the second substrate 20 mirror those of the first substrate 10, except for the requirement that the second substrate 20 must be at least partially transparent to infrared light. The second substrate 20 may be made from glass, ceramic, polymer, or plastic.

The light-transmitting conductive layer 30 is disposed on the primary region 121 of the second surface 12 of the first substrate 10. The hiding perimeter layer 40 is disposed on the peripheral region 122 of the second surface 12 of the first substrate 10. The transflective film 50 is disposed on the third surface 21 of the second substrate 20.

The light-transmitting conductive layer 30 and the transflective film 50 serve as electrodes, respectively. The light-transmitting conductive layer 30 is made from a material having high light transmittance and excellent conductivity, examples of which include fluorine-doped tin oxides, doped zinc oxides, indium zinc oxides ($Zn_3In_2O_6$), indium tin oxides (ITO), and ITO/metal/ITO (IMI). The hiding perimeter layer 40 may be made from a metal material, such as a chromium layer.

The transflective film 50 has a near-infrared and/or an infrared light transmission level and a visible light reflectance level. In an example, the infrared light transmission level exceeds 50% and the visible light reflectance level exceeds 50%. In another example, the infrared light transmission level exceeds 60% and the visible light reflectance level exceeds 60%. In yet another example, the infrared light transmission level exceeds 70%.

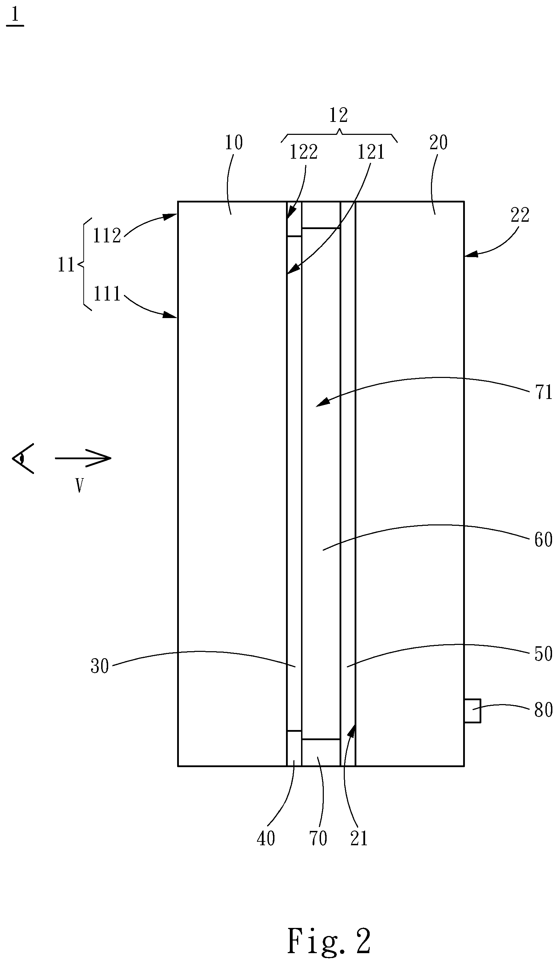

The transflective film 50 is configured as a multi-layer structure, specifically a metal-free multi-layer film. That is, there is no metal or alloy composition in the transflective film 50, thus reducing the cost of materials and also the complexity of manufacturing of the transflective film 50. The metal-free multi-layer film possesses optical characteristics that enable semi-reflection for visible light, high transmission for infrared light, and concurrent conductive properties. Hence, apart from functioning as an electrode, the transflective film 50 additionally furnishes the user with a rear view utilizing reflection through its optical attributes. Furthermore, the rearview mirror assembly 1 can be further equipped with an infrared thermal image sensor 80, as depicted in FIG. 2.

For instance, the infrared thermal image sensor 80 may be positioned on a side of the second substrate 20 opposite the first substrate 10, specifically, on the side opposite the viewing direction V. The infrared thermal image sensor 80 captures infrared rays passing through both the first substrate 10 and the second substrate 20 from the exterior, acquiring infrared thermal image data. This facilitates monitoring of conditions within the vehicle, thereby enhancing driver and passenger safety. For example, it may detect and identify scenarios such as driver drowsiness, intoxicated driving, unconsciousness, inadvertent locking of a child inside the vehicle, or leaving a child unattended in the vehicle. In the event of such occurrences, the vehicle can issue warnings to alert the driver, passengers, or third parties. In an example, the infrared thermal image sensor 80 is capable of sensing infrared light with a wavelength ranging between 940 nm and 1080 nm. The infrared thermal image sensor 80 may be connected to an electronic control unit (ECU) comprising a processor and a thermal imaging data obtained by the infrared thermal image sensor 80 is received at and is processed at the ECU.

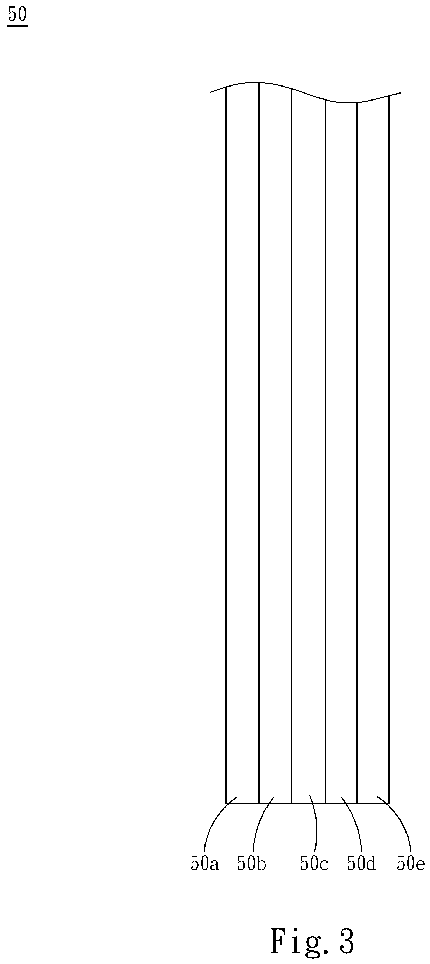

FIG. 3 provides a non-limiting example of the transflective film 50, which comprises a first layer 50a, a second layer 50b, a third layer 50c, a fourth layer 50d, and a fifth layer 50e, where the first layer 50a is ITO, the second layer 50b is $SiO_2$, the third layer 50c is $Nb_2O_5$, the fourth layer 50d is $SiO_2$, and the fifth layer 50e is a-Si, forming a five-layer structure of ITO/$SiO_2$/$Nb_2O_5$/$SiO_2$/a-Si. The first layer 50a is positioned close to a front of the rearview mirror assembly 1, while the fifth layer 50e is located close to a rear of the rearview mirror assembly 1. In an example, the first layer 50a has a thickness ranging between 100 nm and 200 nm, the second layer 50b has a thickness between 50 nm and 100 nm, the third layer 50c has a thickness between 25 nm and 75 nm, the fourth layer 50d has a thickness between 75 nm and 125 nm, and the fifth layer 50e has a thickness between 10 nm and 50 nm. In another example, the first layer 50a has a thickness of 155 nm, the second layer 50b has a thickness of 73 nm, the third layer 50c has a thickness of 56 nm, the fourth layer 50d has a thickness of 104 nm, and the fifth layer 50e has a thickness of 25 nm. Based on the above-mentioned configuration, the transflective film 50 has the infrared light transmission level exceeding 50% and the visible light reflectance level exceeding 50%. In an example, the transflective film 50 is composed of ITO, $SiO_2$, $Nb_2O_5$, $SiO_2$ and a-Si and without any metal composition.

The electrochromic medium 60 is positioned between the first substrate 10 and the second substrate 20. Moreover, the electrochromic medium 60 is situated between the light-transmitting conductive layer 30 and the transflective film 50. On each side of the electrochromic medium 60, direct contact is provided with the light-transmitting conductive layer 30 and the transflective film 50, respectively. The light-transmitting conductive layer 30 is a front electrode and the transflective film 50 is a back electrode, which are in electrical contact with the electrochromic medium 60 and electrically connected with an electrical circuit. By applying an electrical voltage or current to the electrochromic medium 60 through the light-transmitting conductive layer 30 and the transflective film 50, the color (hue) or tint of the electrochromic medium 60 can be altered.

The sealing member 70, the light-transmitting conductive layer 30 and the transflective film 50 collectively define a chamber 71 configured to house the electrochromic medium 60. The sealing member 70 serves the purpose of preventing any outward leakage of the electrochromic medium 60. In one example, epoxy resin can be utilized as the sealing member 70, and the hiding perimeter layer 40 functions to conceal the sealing member 70 in the viewing direction V.

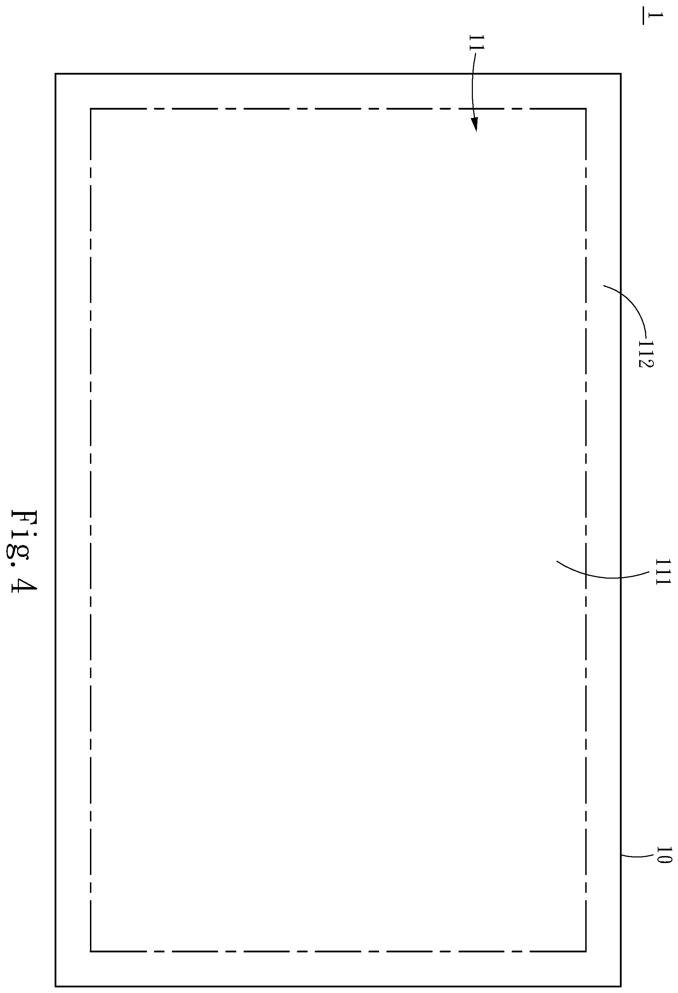

FIG. 4 illustrates the first primary region 111 and the first peripheral region 112 on the first surface 11. In an embodiment, the first substrate 10 and the light-transmitting conductive layer 30 are both substantially transparent, thus the color characteristics and reflectance effect presented in the first primary region 111 and the first peripheral region 112 are mainly influenced by the color characteristics and reflectance effect of the transflective film 50 and the hiding perimeter layer 40 situated behind these regions.

In discussing the color characteristics (a*, b*, C* and Y) of the electrochromic rearview mirror assembly 1, the b* values (b* in the CIELAB color space) of each of the elements in the electrochromic rearview mirror assembly 1 play a significant role in influencing the viewer's visual perception. A more positive b* value results in a yellower hue, while a more negative b* value produces a bluer hue. As the electrochromic rearview mirror assembly 1 is a stack structure of the first substrate 10, the second substrate 20, the light-transmitting conductive layer 30, the hiding perimeter layer 40, the transflective film 50 and the electrochromic medium 60. It should be understood that a b* value of the first primary region 111 and the first peripheral region 112 after the fabrication of the electrochromic rearview mirror assembly 1 is different from a b* value of the first primary region 111 and the first peripheral region 112 of the individually first substrate 10 prior to the fabrication. In other words, the individual b* value of the first substrate 10, the light-transmitting conductive layer 30, the hiding perimeter layer 40, the electrochromic medium 60 and the transflective film 50 together decide a b* value of the visible window. Namely, the b* value on the first primary region 111 and the first peripheral region 112 is influenced by the first substrate 10, the light-transmitting conductive layer 30, the hiding perimeter layer 40, the electrochromic medium 60 and the transflective film 50 positioned behind a front surface of the first substrate 10. However, the first substrate 10 and the light-transmitting conductive layer 30 usually are both substantially transparent, thus the color characteristics and reflectance effect of the first primary region 111 and the first peripheral region 112 are mainly influenced by the color characteristics and reflectance effect of the transflective film 50 and the hiding perimeter layer 40 situated behind these regions, when the electrochromic medium 60 is in a clear or a clearest states.

It is, therefore, important and crucial to coordinate the individual b* value of each of the elements (prior to fabrication) of the electrochromic rearview mirror assembly 1 within an appropriate range to ensure that the resultant b* value of the first primary region 111 and the first peripheral region 112 of the electrochromic rearview mirror assembly 1 (after fabrication) falls within a desired range to improve visual characteristics and minimize visually perceptible coloration, namely, minimizing color impact.

In addition to this, it is found that the contrast (or the difference) of the color characteristics between the b* values of the first primary region 111 and the first peripheral region 112 also plays a significant role in influencing the viewer's visual perception.

The b* values described below is measured in reflected ambient light and the electrochromic medium 60 is in a in a clear or a clearest state (no electrical potential difference between the electrodes.

In an example, viewed in the viewing direction V, the b* value of the first primary region 111 and the b* value of the first peripheral region 112 satisfy the following formula:

$$b_1^* < b_2^*$$

The b* value of the above formula is determined from a viewpoint of an observer (driver or vehicle occupant) looking at a front surface of the rearview mirror assembly 1, that is, when viewed in front of the rearview mirror assembly 1 (the fabricated assembly). $b_1^*$ is the b* value of the first peripheral region 112, and $b_2^*$ is the b* value of the first primary region 111.

The b* value of the individual transflective film 50 and the b* value of the individual hiding perimeter layer 40 satisfy the following formula:

$$b_4^* < b_3^*$$

In the above formula, $b_3^*$ is the b* value of the hiding perimeter layer 40 and $b_4^*$ is the b* value of the transflective film 50. $b_3^*$ and $b_4^*$ are the b* values associated with the individual transflective film 50 and the individual hiding perimeter layer 40 prior to fabrication of the rearview mirror assembly 1.

In an example, the $b_3^*$ value of the hiding perimeter layer 40 is within the range between -2.6 and 0, such as between -2.6 and -2.2, and the $b_4^*$ value of the transflective film 50 is within the range between -5.7 and 0, such as between -5.7 and -5.1.

For the rearview mirror assembly 1 that is assembled from the hiding perimeter layer 40 with the $b_3^*$ value between -2.6 and 0 and the transflective film 50 with the $b_4^*$ value between -5.7 and 0, it is obtained that a resultant b* value of the first peripheral region 112 is between -2.6 and 0, and a resultant b* value of the first primary region 111 is between 0 and +2.5 when observed from the viewer toward the first surface 11 of the rearview mirror assembly 1. The resultant b* value is defined when the rearview mirror assembly 1 is in its clearest state without the applied voltage (no electrical potential difference between the electrodes).

For the rearview mirror assembly 1 that is assembled from the hiding perimeter layer 40 with the $b_3^*$ value between -2.6 and -2.2 and the transflective film 50 with the $b_4^*$ value between -5.7 and - 5.1, it is obtained that a resultant b* value of the first peripheral region 112 is between -2.6 and -2.2, and a resultant b* value of the first primary region 111 is between +2.1 and +2.5 when observed from the viewer toward the first surface 11 of the rearview mirror assembly 1. The resultant b* value is defined when the rearview mirror assembly 1 is in its clearest state without the applied voltage (no electrical potential difference between the electrodes).

In an example, the resultant b* value of the first peripheral region 112 as viewed from the front of the rearview mirror assembly 1 is approximately -2.3, and the resultant b* value of the first primary region 111 as viewed from the front of the rearview mirror assembly 1 is approximately +2.4.

By carefully choosing the b* value of the transflective film 50 between -5.1 and -5.7, so that after the first substrate 10, the second substrate 20, the light-transmitting conductive layer 30, the transflective film 50 and the electrochromic medium 60 are stacked together, b* value of the first primary region 111 is between +2.1 and +2.5 and b* value of the first peripheral region 112 is between -2.6 and -2.2, providing improved visual characteristics and minimizing visually perceptible coloration.

## Claims

**1.** An electrochromic rearview mirror assembly (1), comprising:

a first substrate (10), comprising a first surface (11) facing a viewer and a second surface (12) behind the first surface (11), the first surface (11) comprising a first peripheral region (112) and a first primary region (111) surrounded by the first peripheral region (112), the second surface (12) comprising a second peripheral region (122) and a second primary region (121) surrounded by the second peripheral region (122);

a second substrate (20) disposed behind the first substrate (10), the second substrate (20) comprising a third surface (21) facing the first substrate (10) and a fourth surface (22) opposite to the third surface (21);

an electrochromic medium disposed between the first substrate (10) and the second substrate (20);

a light-transmitting conductive layer (30) disposed on the second primary region (121) of the second surface (12) of the first substrate (10);

a transflective film (50) disposed on the third surface (21) of the second substrate (20), the transflective film (50) facing the second primary region (121) of the second surface (12) of the first substrate (10), wherein the transflective film (50) is a metal-free multi-layer film and has a color characteristic b* value between -5.7 and 0 prior to fabrication of the electrochromic rearview mirror assembly (1); and

a hiding perimeter layer (40) disposed on the second peripheral region (122) of the second surface (12) of the first substrate (10), the hiding perimeter layer (40) having a color characteristic b* value between -2.6 and 0 prior to fabrication of the electrochromic rearview mirror assembly (1);

wherein, a color characteristic b* value of the first peripheral region (112) on the electrochromic rearview mirror assembly (1) is between -2.6 and 0, and a color characteristic b* value of the first primary region (111) on the electrochromic rearview mirror assembly (1) is between 0 and +2.5 when viewed from front of the electrochromic rearview mirror assembly (1); and

wherein, a color characteristic b* value of the transflective film (50) and a color characteristic b* value of the hiding perimeter layer (40) satisfy the following formula:

$$b_4^* < b_3^*$$

$b_3^*$ is the color characteristic b* value of the hiding perimeter layer (40) prior to fabrication of the electrochromic rearview mirror assembly (1), and $b_4^*$ is the color characteristic b* value of the transflective film (50) prior to fabrication of the electrochromic rearview mirror assembly (1).

2. The electrochromic rearview mirror assembly (1) according to claim 1, wherein the color characteristic b* value of the first peripheral region (112) when viewed from front of the electrochromic rearview mirror assembly (1) is approximately - 2.3.

3. The electrochromic rearview mirror assembly (1) according to claim 1, wherein the color characteristic b* value of the first primary region (111) when viewed from front of the electrochromic rearview mirror assembly (1) is approximately +2.4.

4. The electrochromic rearview mirror assembly (1) according to claim 1, wherein the transflective film (50) comprises a first layer, a second layer disposed on the first layer, a third layers disposed on the second layer, a fourth layer disposed on the third layer and a fifth layer disposed on the fourth layer, the first layer is indium tin oxide (ITO), the second layer is silicon dioxide ($SiO_2$), the third layer is niobium pentoxide ($Nb_2O_5$), the fourth layer is silicon dioxide ($SiO_2$), and the fifth layer is amorphous silicon (a-Si).

5. The electrochromic rearview mirror assembly (1) according to claim 4, wherein a thickness of the first layer is between 100 nm and 200 nm, a thickness of the second layer is between 50 nm and 100 nm, a thickness of the third layer is between 25 nm and 75 nm, a thickness of the fourth layer is between 75 nm and 125 nm, and a thickness of the fifth layer is between 10 nm and 50 nm.

**Patentansprüche**

1. Elektrochrome Rückspiegelanordnung (1), umfassend:

ein erstes Substrat (10) mit einer ersten Oberfläche (11), die einem Betrachter zugewandt ist, und einer zweiten Oberfläche (12) hinter der ersten Oberfläche (11), wobei die erste Oberfläche (11) einen ersten peripheren Bereich (112) und einen ersten primären Bereich (111) umfasst, der vom ersten peripheren Bereich (112) umgeben ist, wobei die zweite Oberfläche (12) einen zweiten peripheren Bereich (122) und einen zweiten primären Bereich (121) umfasst, der von dem zweiten peripheren Bereich (122) umgeben ist;
ein zweites Substrat (20), das hinter dem ersten Substrat (10) angeordnet ist, wobei das zweite Substrat (20) eine dritte Oberfläche (21), die dem ersten Substrat (10) zugewandt ist, und eine vierte Oberfläche (22) umfasst, die der dritten Oberfläche (21) gegenüberliegt;
ein elektrochromes Medium, das zwischen dem ersten Substrat (10) und dem zweiten Substrat (20) angeordnet ist;
eine lichtdurchlässige leitfähige Schicht (30), die auf dem zweiten primären Bereich (121) der zweiten Oberfläche (12) des ersten Substrats (10) angeordnet ist;
eine transflektierende Folie (50), die auf der dritten Oberfläche (21) des zweiten Substrats (20) angeordnet ist, wobei die transflektierende Folie (50) dem zweiten primären Bereich (121) der zweiten Oberfläche (12) des ersten Substrats (10) zugewandt ist, wobei die transflektierende Folie (50) ein metallfreier Mehrschichtfilm ist und vor der Herstellung der elektrochrome Rückspiegelanordnung (1) ein Farbkennzeichen b*-Wert zwischen -5,7 und 0 aufweist; und
eine verdeckende Perimeterschicht (40), die auf dem zweiten peripheren Bereich (122) der zweiten Oberfläche (12) des ersten Substrats (10) angeordnet ist, wobei die verdeckende Perimeterschicht (40) vor der Herstellung der elektrochromen Rückspiegelanordnung (1) einen Farbkennzeichen b*-Wert zwischen -2,6 und 0 aufweist;
wobei ein Farbkennzeichen b*-Wert des ersten peripheren Bereichs (112) auf der elektrochromen Rückspiegelanordnung (1) zwischen -2,6 und 0 liegt und ein Farbkennzeichen b*-Wert des ersten primären Bereichs (111) auf der elektrochromen Rückspiegelanordnung (1) zwischen 0 und +2,5 liegt, wenn man von vorne auf die elektrochrome Rückspiegelanordnung (1) blickt; und
wobei ein Farbkennzeichen b*-Wert der transflektierenden Folie (50) und ein Farbkennzeichen b*-Wert der verdeckenden Perimeterschicht (40) die folgende Formel erfüllen:

$$b_4^* < b_3^*$$

$b_3^*$ ist der Farbkennzeichen b*-Wert der verdeckenden Perimeterschicht (40) vor der Herstellung der elektrochromen Rückspiegelanordnung (1) und $b_4^*$ ist der Farbkennzeichen b*-Wert der transflektierenden Folie (50) vor der Herstellung der elektrochromen Rückspiegelanordnung (1).

2. Elektrochrome Rückspiegelanordnung (1) gemäß Anspruch 1, wobei das Farbkennzeichen b*-Wert des ersten peripheren Bereichs (112), von der Vorderseite der elektrochromen Rückspiegelanordnung (1) aus gesehen, ungefähr -2,3 beträgt.

**3.** Elektrochrome Rückspiegelanordnung (1) gemäß Anspruch 1, wobei das Farbkennzeichen b*-Wert des ersten primären Bereichs (111), von der Vorderseite der elektrochromen Rückspiegelanordnung (1) aus gesehen, ungefähr +2,4 beträgt.

**4.** Elektrochrome Rückspiegelanordnung (1) nach Anspruch 1, wobei die transflektierende Folie (50) eine erste Schicht, eine auf der ersten Schicht angeordnete zweite Schicht, eine auf der zweiten Schicht angeordnete dritte Schicht, eine auf der dritten Schicht angeordnete vierte Schicht und eine auf der vierten Schicht angeordnete fünfte Schicht umfasst, wobei die erste Schicht aus Indiumzinnoxid (ITO) besteht, die zweite Schicht aus Siliciumdioxid ($SiO_2$), die dritte Schicht aus Niobpentoxid ($Nb_2O_5$), die vierte Schicht aus Siliciumdioxid ($SiO_2$) und die fünfte Schicht aus amorphem Silizium (a-Si) besteht.

**5.** Elektrochrome Rückspiegelanordnung (1) gemäß Anspruch 4, wobei die Dicke der ersten Schicht zwischen 100 nm und 200 nm liegt, die Dicke der zweiten Schicht zwischen 50 nm und 100 nm liegt, die Dicke der dritten Schicht zwischen 25 nm und 75 nm liegt, die Dicke der vierten Schicht zwischen 75 nm und 125 nm liegt und die Dicke der fünften Schicht zwischen 10 nm und 50 nm liegt.

**Revendications**

**1.** Un dispositif de rétroviseur électrochrome (1) comprenant :

un premier substrat (10) avec une première surface (11) tournée vers un observateur et une deuxième surface (12) derrière la première surface (11), la première surface (11) comprenant une première zone périphérique (112) et une première zone principale (111) qui est entourée par la première zone périphérique (112), la deuxième surface (12) comprenant une deuxième zone périphérique (122) et une deuxième zone principale (121) qui est entourée par la deuxième zone périphérique (122) ;
un deuxième substrat (20) disposé derrière le premier substrat (10), le deuxième substrat (20) comprenant une troisième surface (21) tournée vers le premier substrat (10) et une quatrième surface (22) opposée à la troisième surface (21) ;
un milieu électrochrome disposé entre le premier substrat (10) et le deuxième substrat (20) ;
une couche conductrice translucide (30) disposée sur la deuxième zone principale (121) de la deuxième surface (12) du premier substrat (10) ;
une feuille transflective (50) disposée sur la troisième surface (21) du deuxième substrat (20), la feuille transflective (50) étant tournée vers la deuxième zone principale (121) de la deuxième surface (12) du premier substrat (10), la feuille transflective (50) étant un film multicouche sans métal et présentant, avant la fabrication de l' e dispositif de rétroviseur électrochrome (1), une valeur de repère de couleur b* comprise entre -5,7 et 0 ; et
une couche périphérique de recouvrement (40) disposée sur la deuxième zone périphérique (122) de la deuxième surface (12) du premier substrat (10), la couche périphérique de recouvrement (40) présentant, avant la fabrication du dispositif de rétroviseur électrochrome (1), une valeur de couleur b*comprise entre -2,6 et 0 avant la fabrication de l'ensemble de rétroviseur électrochrome (1) ;
la valeur b* de la première zone périphérique (112) sur le dispositif de rétroviseur électrochrome (1) étant comprise entre -2,6 et 0 et la valeur b*de la première zone primaire (111) sur le dispositif de rétroviseur électrochrome (1) est comprise entre 0 et +2,5 lorsque l'on regarde le dispositif de rétroviseur électrochrome (1) de face ; et
la valeur b* de l'indicateur de couleur du film transflectif (50) et la valeur b* de l'indicateur de couleur de la couche périphérique de recouvrement (40) satisfont à la formule suivante :

$$b_4^* < b_3^*$$

$b_3^*$ est la valeur b* de l'indicateur de couleur de la couche périphérique de recouvrement (40) avant la fabrication de l'ensemble de rétroviseur électrochrome (1) et $b_4^*$ est la valeur b* de l'indicateur de couleur du film transflectif (50) avant la fabrication de l'ensemble de rétroviseur électrochrome (1).

**2.** Le dispositif de rétroviseur électrochrome (1) selon l' , la valeur b* de l'indice de couleur de la première zone périphérique (112), vue depuis la face avant du dispositif de rétroviseur électrochrome (1), étant d'environ -2,3.

**3.** Le dispositif de de rétroviseur électrochrome (1) selon la revendication 1, dans lequel la valeur b* de l'indice de couleur de la première zone primaire (111), vue depuis la face avant de l'ensemble de rétroviseur électrochrome (1), est d'environ +2,4.

**4.** Le dispositif de de rétroviseur électrochrome (1) selon la revendication 1, dans lequel le film transflectif (50) comprend une première couche, une deuxième couche disposée sur la première couche, une troisième couche disposée sur la deuxième couche, une quatrième couche disposée sur la troisième couche et une cinquième couche disposée sur la quatrième couche, la première couche étant constituée d'oxyde d'indium-étain (ITO), la deuxième couche étant constituée de dioxyde de silicium ($SiO_2$), la troisième couche étant constituée de pentoxyde de niobium ($Nb_2O_5$), la quatrième couche est constituée de dioxyde de silicium ($SiO_2$) et la cinquième couche est constituée de silicium amorphe (a-Si).

5. Le dispositif de de rétroviseur électrochrome (1) selon la revendication 4, dans lequel l'épaisseur de la première couche est comprise entre 100 nm et 200 nm, l'épaisseur de la deuxième couche est comprise entre 50 nm et 100 nm, l'épaisseur de la troisième couche est comprise entre 25 nm et 75 nm, l'épaisseur de la quatrième couche est comprise entre 75 nm et 125 nm et l'épaisseur de la cinquième couche est comprise entre 10 nm et 50 nm.

1

Fig. 1

1

Fig. 2

50

50a  50b    50c  50d  50e

Fig.3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10746910 B2
- US 20190094642 A1
- US 7821696 B2
- US 7663798 B2
- US 6356376 B1